# EUROPÄISCHE PATENTSCHRIFT

(11) **EP 1 530 747 B1**
(45) Veröffentlichungstag und Bekanntmachung des Hinweises auf die Patenterteilung: **26.09.2007**
(21) Anmeldenummer: 03740430.8
(22) Anmeldetag: 03.07.2003
(51) Int. Cl.: G05B 19/04, G08B 13/187

(54) **ELEKTRISCHES GERÄT**
ELECTRICAL APPLIANCE
APPAREIL ELECTRIQUE

(30) Priorität: 12.08.2002 DE 10236937
(43) Veröffentlichungstag der Anmeldung: 18.05.2005
(73) Patentinhaber: BSH Bosch und Siemens Hausgeräte GmbH, 81739 München (DE)
(72) Erfinder: LUDENIA, Thomas, 14612 Falkensee (DE)
(86) Internationale Anmeldenummer: PCT/EP2003/007263
(87) Internationale Veröffentlichungsnummer: WO 2004/019145

(56) Entgegenhaltungen:
- WO-A-95/33248
- US-A- 5 546 071

## Beschreibung

Die Erfindung bezieht sich auf ein elektrisches Haushaltgerät mit einer Einrichtung zum Steuern von Gerätefunktionen und mit einer Bedienungseinrichtung zum Eingeben von Befehlen zum Steuern von Gerätefunktionen durch eine Bedienungsperson und mit einer Anzeigeeinrichtung zum Ausgeben von die Gerätefunktionen betreffenden Programmparametern an eine Benutzungsperson sowie mit einem Bewegungsmelder.

Ein solches elektrisches Haushaltgerät geht hervor aus dem US-Patent 5,546,071.

Moderne Haushaltgeräte sind mit einer optischen Anzeigeeinrichtung insbesondere einem Display ausgerüstet, das dem Nutzer programmbezogene Hinweise, also Informationen zum Programm und zum Programmablauf, im Klartext anzeigt. Dem Nutzer soll durch die Anzeigen im Display die Programmierung des Haushaltgerätes erleichtert werden, so dass nach Möglichkeit auf eine Gerätebeschreibung oder Bedienanleitung verzichtet werden kann.

Ein solches Display wird in der DE 196 06 115 A1 beschrieben. Danach sind in der Bedienblende eines Backofens mehrere Displays für Informationsausgaben im Klartext angeordnet. Jedem Display ist eine spezielle Funktion zugewiesen. Dadurch werden die Anzeigen übersichtlicher dargestellt.

Eine vergleichbare Vorrichtung ist auch aus der DE 198 34 230 A1 bekannt, bei der einer Klartextanzeige Bedienelemente für in der Anzeige jeweils benannte Programmparameter zugeordnet sind.

Allen solchen Bedienungs- und Anzeigeeinrichtungen, auch Kommunikationseinrichtungen genannt, sowie allgemeinen Einrichtungen zur Beleuchtung an Haushaltgeräten ist gemeinsam, dass sie zumindest während des Betriebs des Haushaltgerätes aber auch während seiner Nichtbenutzung im sogenannten Stand-by-Betrieb elektrische Energie verbrauchen, die ohne jede Wirkung bleibt, solange keine Benutzungsperson davon Kenntnis nimmt. Außerdem wirkt auf manche Benutzungsperson das dauernde Leuchten von Anzeigemitteln lästig.

Es ist Aufgabe der Erfindung, eine Vorrichtung zu schaffen, bei der die Anzeigeelemente sowie sonstige Beleuchtungseinrichtungen und Signalausgabeeinrichtungen immer nur aktiviert sind, wenn eine Benutzungsperson vom Informationsinhalt der Anzeige, Ausgabe oder der Beleuchtung Kenntnis erhalten soll.

Bei einem elektrischen Haushaltgerät der eingangs genannten Art wird diese Aufgabe dadurch gelöst, dass der Bewegungsmelder mit der Einrichtung zum Steuern und der Bedienungseinrichtung und/oder der Anzeigeeinrichtung wirkverbunden ist und dass die Bedienungseinrichtung und/oder die Anzeigeeinrichtung nur bei Erhalt eines Signals vom Bewegungsmelders wirksam schaltbar ist.

Durch den Eingriff des Bewegungsmelders wird eine unnötige Einschaltung der Kommunikationseinrichtungen vermieden. Gleichzeitig ist damit eine bedeutende Erhöhung der Lebensdauer der zugehörigen Leuchtmittel bzw. Anzeigedisplays verbunden.

Wenn gemäß einer vorteilhaften Ausführung der Erfindung der Bewegungsmelder ein Infrarot-Signalempfänger ist, hält sich der Zusatzaufwand für die erfindungsgemäße Einschaltung der Anzeigeeinrichtung oder Beleuchtung nur bei Annäherung einer Person in sehr engen Grenzen.

Dadurch, dass für den Bewegungsmelder ein Infrarot-Signalempfänger zum Einsatz kommt, wird ausgeschlossen, dass im Gegensatz zu Ultraschall-Signalempfängern das Aussenden irgend eines fremden akustischen Signals bereits die Anzeige- oder Beleuchtungseinrichtung aktiviert werden kann.

In vorteilhafter Weise ist der Bewegungsmelder ein auf Signaländerungen reagierender Sensor.

In einer besonders vorteilhaften Weiterbildung der Erfindung ist durch das Signal des Bewegungsmelders ein Timer aktivierbar, durch den die Einschaltdauer für die Bedienungseinrichtung und/oder die Anzeigeeinrichtung und/oder die Steuerungseinrichtung einstellbar ist. Die Bedienungs-, Anzeige- und/oder Steuereinrichtung bleibt dann je nach Einstellung der Zeitdauer solange eingeschaltet, bis das System erwarten kann, dass eine andauernde Bewegungslosigkeit die Abwesenheit jeder möglichen Benutzungsperson bedeutet.

Nur wenn die Kombination von Bewegung eines Menschen und einer anschließenden Benutzungshandlung vorliegt, wird der Timer gesetzt, also Beginnt die Einschaltdauer. Dabei wird abgewartet, ob diese Benutzungshandlung innerhalb eines vorgegebenen Zeitraums nach der Aktivierung des Bewegungsmelder-Signals registriert wir. Andernfalls wird weder die Kommunikationseinrichtung eingeschaltet noch der Timer gesetzt.

Besonders geeignet ist ein Sensor, der eine Richtcharakteristik für die von ihm selektierte Strahlung, insbesondere die Infrarotstrahlung, aufweist. Aufgrund einer derartigen Richtcharakteristik wird erreicht, dass der Sensor die Einschaltung der Kommunikationseinrichtung nur dann bewirkt, wenn die Infrarot- oder die eine andere Strahlung aussendende bzw. reflektierende Quelle innerhalb eines bestimmten Raumbereichs erscheint. Somit lässt sich die Aktivierung des Bewegungsmelders beispielsweise auf das Vorhandensein von erwachsenen Personen beschränken, die aufgrund ihrer Körpergröße in den Erfassungsbereich des Sensors gelangen, während Kinder aufgrund ihrer geringeren Größe den Sensor nicht auslösen können.

Besonders geeignet ist eine Vorrichtung, die zusätzlich noch ein Bilderfassungssystem aufweist, beispielsweise eine Kamera oder ein CCD-Array, das bestimmte Personen erkennt und das eingeschaltet wird, wenn der Bewegungsmelder, insbesondere der Infrarotsignal-Empfänger, eine bewegte und Infrarotsignale emittierende oder reflektierende Quelle feststellt.

Beispielsweise für den Fall der Einschaltung einer Beleuchtung an dem Haushaltgerät ist eine Weiterbildung der Erfindung besonders vorteilhaft, bei der der Bewegungsmelder mit einem Lichtsensor derartig wirkverbunden ist, dass das Signal des Bewegungsmelders nur von einer bestimmten Schwelle der Umgebungshelligkeit an oder bis zu einer bestimmten Schwelle Wirkung hat. Dann wird die Kommunikationseinrichtung oder d as Beleuchtungsmittel erst eingeschaltet, wenn die Umgebungshelligkeit eine zusätzliche künstliche Beleuchtung der Anzeige oder des zu beleuchtenden Bereiches erfordert.

Der Lichtsensor kann dann auch für eine an sich bekannte Intensitätssteuerung von Leuchtmitteln des Haushaltgerätes vorgesehen sein. Dies würde die zusätzliche Anbringung von Mess- und Steuerungsmitteln für die Umgebungshelligkeit ersparen.

Bei einem vernetzten Haushaltgerät, das mit der erfindungsgemäßen Bewegungsmeldungssteuerung ausgestattet ist, kann die Einrichtung so getroffen sein, dass das Signal des Bewegungsmelders dem Kommunikationsnetz zuführbar ist. Dann kann dieses Signal im Netz für weitere Funktionen verwendet werden. Beispielsweise kann das Bewegungsmelder-Signal zur Raumüberwachung im Zusammenspiel mit Alarmanlagen dienen, oder es kann vorgegebene Schaltmaßnahmen auslösen, beispielsweise das Einschalten der Raumbeleuchtung.

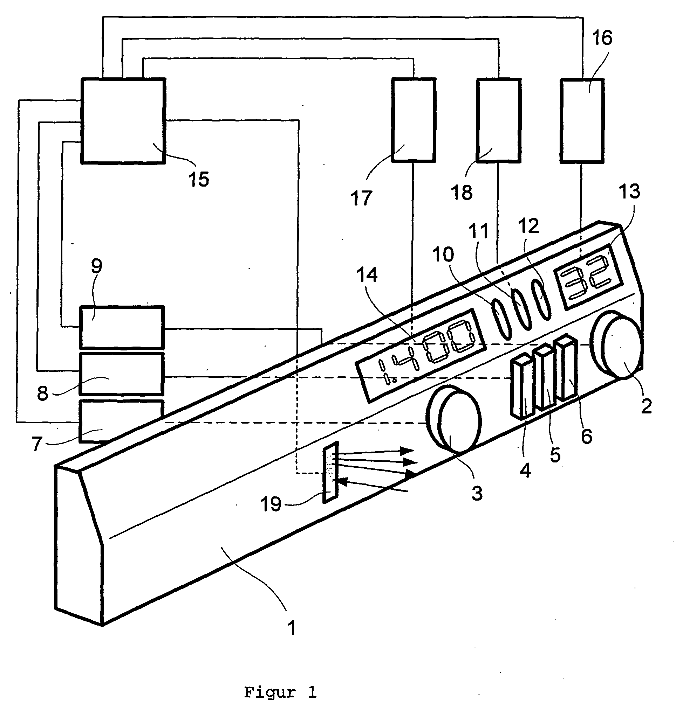

Weitere vorteilhafte Ausbildungen der Erfindung ergeben sich aus der nachfolgenden Beschreibung, in der die Erfindung anhand eines in der Zeichnung dargetellten Ausführungsbeispiels und näher erläutert wird. Die Zeichnung zeigt in der einzigen Figur ein Bedienfeld eines Haushaltgerätes, beispielsweise einer Waschmaschine, mit schematisch dargestellten Verbindungen zu einzelnen Schaltungsbaugruppen eines Blockschaltbildes.

Das Bedienungsfeld 1 kann an einer Waschmaschine, die hier nicht dargestellt ist, in üblicherweise befestigt und mit der elektrischen Ausrüstung der Waschmaschine galvanisch verbunden sein. Dies deuten die als einfache Linien dargestellte Wirkverbindungen zwischen dem Bedienungsfeld 1 und den jeweiligen Schaltungsbaugruppen an. Am Bedienungsfeld 1 sind Eingabeelemente in Form von Drehwählem 2 und 3 und in Form von Drucktasten 4 bis 6 angebracht. Diese Eingabeelemente sind nach innen derart mechanisch verbunden, dass damit bestimmte elektrische Einstellungen an den Baugruppen 7 bis 9 vollzogen werden können.

Solche Einstellungen werden am Bedienungsfeld in geeigneter Weise quittiert. Dazu dienen den Drucktasten 4 bis 6 zugeordnete Anzeigeleuchten 10 bis 12 und den Drehwählem 2 und 3 zugeordnete Anzeigedisplays 13 und 14. Die Tasten 4 bis 6 können beispielsweise Momentschalter sein und dazu vorgesehen sein, um bestimmte Prozesseigenarten ein- oder auszuschalten. Bei Waschmaschinen sind dies beispielsweise "Intensiv waschen", "Extraspülen" und "Knitterschutz". Dazu muss jeweils die zugeordnete Anzeigeleuchte 10, 11 oder 12 leuchten, damit der Benutzungsperson der Ein- oder Ausschaltzustand signalisiert werden kann.

Dem Drehwähler 2 ist ein Anzeigedisplay 13 zugeordnet, das beispielsweise einen Programmnamen in Klarschrift oder eine dem Programmnamen zugeordnete Zahl anzeigt. Die Drehbedienung des Drehwählers 2 löst dabei die zugeordnete Anzeige automatisch aus, weil der Drehwähler über die Eingabesignalschaltung 9 an die Zentraleinheit 15 angeschlossen ist, die ihrerseits aus der von der Eingabesignalschaltung 9 erhaltenen Information über die Drehwählerstellung ein bestimmtes Signal an den Anzeigebildgenerator 16 überträgt. Dieser steuert das Anzeigedisplay 13 in geeigneter Weise an.

Entsprechend verläuft die Signalbildung und -konvertierung vom Drehwähler 3 über die Eingabeschaltung 7, die Zentraleinheit 15 und den Anzeigebildgenerator 17 an das Anzeigedisplay 14. Dies zeigt im Beispiel eine vierstellige Zahl für die eingestellte Drehzahl einer Waschmaschinen-Wäschetrommel im Schleudergang an.

In entsprechender Weise werden die Anzeigeleuchten 10 bis 12 über den Anzeigebildgenerator 18 angesteuert.

Das Bedienungsfeld 1 enthält außerdem einen kombinierten Infrarot-Sender/Empfänger 19, der über eine Wirkverbindung unmittelbar an die Zentraleinheit 15 angeschlossen ist. Er ist so ausgebildet, dass er ständig mit einem Minimum an Leistung den vor dem Haushaltgeräte befindlichen Raumabschnitt "ausleuchtet". Dabei ist die Leistung erheblich geringer als die von einer der Anzeigeleuchten 10 bis 12, ganz zuschweigen von d er Aufnahmeleistung der Anzeigedisplays.

Nun können während des Betriebs des Haushaltgeräts die Anzeigeausleuchtung komplett ausgeschaltet und damit zusätzlich zur Energieeinsparung die entsprechenden Anzeigeelemente geschont werden.

Gelangt eine Benutzungsperson in den ausgesendeten Suchstrahl des Infrarot-Senders/Empfängers 19 dann reflektiert dieser diesen Suchstrahl teilweise und in veränderlicher Weise, so dass die nicht dargestellte Auswertelogik des Infrarot-Senders/Empfängers 19 daraus ein Ausgangssignal generiert und an die Zentraleinheit 15 leitet. Diese Zentraleinheit schaltet dann wieder alle Anzeigeelemente 10 bis 14 wirksam.

Sollte die Infrarot-Einrichtung 19 nur aus einem Empfänger bestehen, der in der Lage ist, die von einer Person ausgestrahlte Infrarot-Strahlung zu erkennen, so können auf die aktiven Suchstrahlen verzichtet werden, wodurch nochmals Energie eingespart werden kann.

Alternativ dazu können diese Suchstrahlen auch taktweise mit einem sehr großen Aus/Einschaltverhältnis ausgestrahlt werden, damit beim Einsatz von aktiven Suchstrahlen gegenüber der Dauerstrahlung Energie eingespart werden kann.

immer wenn eine Bewegung im Überwachungsraum gemeldet wird, sollen die Anzeigen wieder aktiviert werden. Sie sollen dann für eine voreingestellte oder durch Vergleich mit der vorangegangenen Dauer bis zur Wiedereinschaltung automatisch anpassbare Einschaltdauer wieder leuchten.

Bei einer Anzeigeleuchte, die vor Ingangsetzen des Haushaltgerätes den Stand-by-Betrieb der Steuerelektronik anzeigt (hier nicht dargestellt), kann der Infrarot-Bewegungsmelder ebenfalls wirksam sein. Dazu wird beim Feststellen einer Bewegung im Überwachungsraum die vorher dunkle Anzeigeleuchte für eine Dauer wirksam geschaltet, die der Benutzungsperson erfahrungsgemäß ausreicht, um nach Feststellung der Bewegung eine Bedienungshandlung vorzunehmen. Wird diese Dauer überschritten, dann erlischt die Anzeigeleuchte sofort wieder.

In besonders vorteilhafter Weise ist der Infrarot-Sender/Empfänger 19 mit einer Richtcharakteristik ausgestattet, die dafür sorgt, dass immer nur ein bestimmter Raumsektor bestrahlt wird. Beispielsweise kann vermieden werden, dass bei Annäherungen von Kindern oder Haustieren an das Haushaltgerät die automatische Einschaltung der Kommunikationseinrichtungen bereits aktiviert wird. Dazu wird die Richtcharakteristik so ausgebildet, dass der untere Raum vor dem Haushaltgerät nicht bestrahlt wird. Dies kann durch ein optisches System, z. B. durch eine Linsenanordnung und/oder eine Blende, realisiert werden. Dabei kann eine solche Blende auch für Infrarot-Strahlung selektiv durchlässig eingerichtet sein.

Eine weitere vorteilhafte Ausstattung eines mit dem erfindungsgemäßen Bewegungsmelder versehenen Haushaltgerätes ist durch einen Lichtsensor gegeben, der ab einer bestimmten Helligkeit den Bewegungsmelder bzw. seine Wirkverbindung zum Steuergerät ein- oder ausschalten kann. Gleichzeitig kann natürlich der Lichtsensor auch zur Steuerung der Strahlungsintensität der Leuchtanzeigen bzw. Beleuchtungen am Haushaltgerät verwendet werden.

Wenn das Signal des Bewegungsmelder über eine geeignete Schnittstelle einem externen Kommunikationsnetz zuführbar ist, kann das Bewegungssignal für zusätzliche Zwecke ausgenutzt werden. Es kann beispielsweise in Zusammenarbeit mit Raumschutzarilagen zur Raumschutzüberwachung dienen. Es kann auch zum automatischen Schalten von Raumbeleuchtungen benutzt werden. In diesem Zusammenhang sind alle Möglichkeiten offen, die sich im Zusammenhang mit Raumüberwachung ergeben.

Da das Bewegungsmelder-Signal auch zum Wirksamschalten von Eingabeelementen als Kommunikationseinrichtungen benutzt werden kann und die selektive Raumüberwachung auch die Einschaltung per Bewegungsmelder bei Kindern unterlassen kann, ist mit dieser Einrichtung auch eine Kindersicherung gegen unbefugtes Bedienen der Eingabeelemente realisierbar.

## Patentansprüche

1. Elektrisches Haushaltgerät mit einer Einrichtung zum Steuern von Gerätefunktionen und mit einer Bedienungseinrichtung zum Eingeben von Befehlen zum Steuern von Gerätefunktionen durch eine Bedienungsperson und mit einer Anzeigeeinrichtung zum Ausgeben von die Gerätefunktionen betreffenden Programmparametern an eine Benutzungsperson sowie mit einem Bewegungsmelder (19), **dadurch gekennzeichnet, dass** der Bewegungsmelder (19) mit der Einrichtung (15) zum Steuern und der Bedienungseinrichtung (2 bis 6) und/oder der Anzeigeeinrichtung (10 bis 14) wirkverbunden ist und dass die Bedienungseinrichtung (2 bis 6) und/oder die Anzeigeeinrichtung (10 bis 14) nur bei Erhalt eines Signals vom Bewegungsmelders (19) wirksam schaltbar ist.

2. Haushaltgerät nach Anspruch 1, **dadurch gekennzeichnet, dass** der Bewegungsmelder ein Infrarot-Sender/Empfänger (19) ist.

3. Haushaltgerät nach Anspruch 1 oder 2, **dadurch gekennzeichnet, dass** der Bewegungsmelder (19) ein auf Signaländerungen reagierender Sensor ist.

4. Haushaltgerät nach einem der Ansprüche 1 bis 3, **dadurch gekennzeichnet, dass** durch das Signal des Bewegungsmelders (19) ein Timer aktivierbar ist, durch den die Einschaltdauer für die Bedienungseinrichtung (2 bis 6) und/oder die Anzeigeeinrichtung (10 bis 14) und/oder die Steuerungseinrichtung (15) einstellbar ist.

5. Haushaltgerät nach Anspruch 4, **dadurch gekennzeichnet, dass** die Einschaltdauer des Timers erst gesetzt wird, wenn eine Kombination des Bewegungsmelder-Signals und einer Benutzungshandlung, die innerhalb eines vorgegebenen Zeitraums nach Aktivierung des Bewegungsmelder-Signals registriert wird, vorliegt.

6. Haushaltgerät nach Anspruch 4 oder 5, **dadurch gekennzeichnet, dass** der Bewegungsmelder (19) eine Richtcharakteristik hat, durch die der von dem Bewegungsmelder (19) detektierbare Raumbereich begrenzt ist.

7. Haushaltgerät nach Anspruch 5, **dadurch gekennzeichnet, dass** der vom Bewegungsmelder (19) detektierbare Raumbereich oberhalb einer vorgegebenen Höhe liegt.

8. Haushaltgerät nach Anspruch 5 oder 6, **dadurch gekennzeichnet, dass** der Bewegungsmelder (19) eine Blende umfasst, die für die Infrarot-Strahlung selektiv durchlässig ist.

9. Haushaltgerät nach einem der Ansprüche 1 bis 6, **dadurch gekennzeichnet, dass** der Bewegungsmelder (19) mit einem Lichtsensor derartig wirkverbunden ist, dass das Signal des Bewegungsmelders nur von einer bestimmten Schwelle der Umgebungshelligkeit an oder bis zu einer bestimmten Schwelle Wirkung hat.

10. Haushaltgerät nach Anspruch 7, **dadurch gekennzeichnet, dass** der Lichtsensor gleichzeitig für eine an sich bekannte Intensitätssteuerung von Leuchtmitteln des Haushaltgerätes vorgesehen ist.

11. Haushaltgerät nach einem der vorstehenden Ansprüche mit einer Einrichtung zur Vernetzung des Haushaltgerätes mit einem externen Kommunikationsnetz, **dadurch gekennzeichnet, dass** das Signal des Bewegungsmelders (19) dem Kommunikationsnetz zuführbar ist.

## Claims

1. Electric domestic appliance with equipment for controlling appliance functions and with operating equipment for input of commands for controlling appliance functions by a user and with indicating equipment for output of program parameters, which relate to the appliance functions, to a user as well with a motion detector (19), **characterised in that** the motion detector (19) is operatively connected with the equipment (15) for controlling and the operating equipment (2 to 6) and/or the indicating equipment (10 to 14) and that the operating equipment (2 to 6) and/or the indicating equipment (10 to 14) is or are switchable to be effective only on receipt of a signal from the motion detector (19).

2. Domestic appliance according to claim 1, **characterised in that** the motion detector is an infrared transmitter/receiver (19).

3. Domestic appliance according to claim 1 or 2, **characterised in that** the motion detector (19) is a sensor reacting to signal changes.

4. Domestic appliance according to one of claims 1 to 3, **characterised in that** a timer by which the switch-on period for the operating equipment (2 to 6) and/or the indicating equipment (10 to 14) and/or the control equipment (15) is settable is activatable by the signal of the motion detector (19).

5. Domestic appliance according to claim 4, **characterised in that** the switch-on period of the timer is set only when a combination of the motion detector signal and a user manipulation, which is registered within a predetermined time period after activation of the motion detector signal, is present.

6. Domestic appliance according to claim 4 or 5, **characterised in that** the motion detector (19) has a directional characteristic by which the three-dimensional region detectable by the motion detector (19) is limited.

7. Domestic appliance according to claim 5, **characterised in that** the three-dimensional region detectable by the motion detector (19) lies above a predetermined height.

8. Domestic appliance according to claim 5 or 6, **characterised in that** the motion detector (19) comprises an aperture selectively permeable by infrared radiation.

9. Domestic appliance according to one of claims 1 to 6, **characterised in that** the motion detector (19) is operatively connected with a light sensor in such a manner that the signal of the motion detector has effect only from a defined threshold of the ambient brightness at or up to a defined threshold.

10. Domestic appliance according to claim 7, **characterised in that** the light sensor is provided at the same time for an intensity control, which is known per se, of lighting means of the domestic appliance.

11. Domestic appliance according to one of the preceding claims with equipment for linking the domestic appliance with an external communications network, **characterised in that** the signal of the motion detector (19) can be supplied to the communications network.

## Revendications

1. Appareil ménager électrique avec un dispositif pour la commande de fonctions de l'appareil et un dispositif d'utilisation pour l'introduction d'ordres de commande de fonctions de l'appareil par un opérateur, et avec un dispositif d'affichage pour sortir, pour un utilisateur, des paramètres programmes concernant les fonctions de l'appareil, ainsi qu'avec un détecteur de mouvement (19), **caractérisé en ce que** le détecteur de mouvement (19) est en liaison fonctionnelle avec le dispositif (15) de commande et le dispositif d'utilisation (2 à 6) et/ou le dispositif d'affichage (10 à 14) et **en ce que** le dispositif d'utilisation (2 à 6) et/ou le dispositif d'affichage (10 à 14) ne sont activables qu'à la réception d'un signal du détecteur de mouvement (19).

2. Appareil ménager selon la revendication 1, **caractérisé en ce que** le détecteur de mouvement est un émetteur / récepteur infrarouge (19).

3. Appareil ménager selon la revendication 1 ou 2, **caractérisé en ce que** le détecteur de mouvement (19) est un capteur qui réagit à des modifications de signaux.

4. Appareil ménager selon l'une des revendications 1 à 3, **caractérisé en ce qu'**est activable, par le signal du détecteur de mouvement (19), une minuterie qui permet le réglage de la durée de marche du dispositif d'utilisation (2 à 6) et/ou du dispositif d'affichage (10 à 14) et/ou du dispositif de commande (15).

5. Appareil ménager selon la revendication 4, **caractérisé en ce que** la durée de marche de la minuterie n'est initialisée qu'en présence d'une combinaison du signal du détecteur de mouvement et d'un acte d'utilisation qui est enregistré dans un espace de temps donné après l'activation du signal du détecteur de mouvement.

6. Appareil ménager selon la revendication 4 ou 5, **caractérisé en ce que** le détecteur de mouvement (19) a une directivité du fait de laquelle la zone de l'espace détectable par le détecteur de mouvement (19) est limitée.

7. Appareil ménager selon la revendication 5, **caractérisé en ce que** la zone de l'espace détectable par le détecteur de mouvement (19) est située au-dessus d'une hauteur donnée.

8. Appareil ménager selon la revendication 5 ou 6, **caractérisé en ce que** le détecteur de mouvement (19) inclut un écran qui est sélectivement perméable au rayonnement infrarouge.

9. Appareil ménager selon l'une des revendications 1 à 6, **caractérisé en ce que** le détecteur de mouvement (19) est en liaison fonctionnelle avec un capteur de lumière de manière telle que le signal du détecteur de mouvement n'a d'effet qu'à partir d'un seuil déterminé de la luminosité ambiante ou jusqu'à un seuil déterminé.

10. Appareil ménager selon la revendication 7, **caractérisé en ce que** le capteur de lumière est en même temps prévu pour une commande, en soi connu, de l'intensité de moyens d'éclairage de l'appareil ménager.

11. Appareil ménager selon l'une des revendications précédentes, avec un dispositif pour la mise en réseau de l'appareil ménager avec un réseau de communication externe, **caractérisé en ce que** le signal du détecteur de mouvement (19) peut être amené au réseau de communication.
